# EUROPEAN PATENT SPECIFICATION

(11) **EP 2 980 970 B1**
(45) Date of publication and mention of the grant of the patent: **30.05.2018**
(21) Application number: 14775319.8
(22) Date of filing: 24.03.2014
(51) Int. Cl.: H02K 21/22, H02K 1/14, H02K 1/16

(54) **MAGNETIC POWER GENERATOR**
MAGNETISCHE STROMERZEUGUNG
GÉNÉRATEUR DE PUISSANCE MAGNÉTIQUE

(30) Priority: 26.03.2013 JP 2013063832
(43) Date of publication of application: 03.02.2016
(73) Proprietor: Mitsuba Corporation, Kiryu-shi Gunma 376-8555 (JP)
(72) Inventor: KAWAGISHI, Masakazu, Kiryu-shi Gunma 376-8555 (JP); FUKUCHI, Takeshi, Kiryu-shi Gunma 376-8555 (JP); KANBE, Michio, Kiryu-shi Gunma 376-8555 (JP)
(74) Representative: Cabinet Laurent & Charras
(86) International application number: PCT/JP2014/058008
(87) International publication number: WO 2014/157049

(56) References cited:
- DE-A1-102010 044 713
- GB-A- 190 605 602
- JP-A- 2004 215 479
- JP-A- 2006 340 425
- JP-A- 2010 098 937
- JP-A- 2011 120 429

## Description

### [Technical Field]

The present invention relates to a magnetic power generator using a permanent magnet, and more particularly, to a three-phase magnetic power generator connected to an engine of a motorcycle or the like.

Priority is claimed on Japanese Patent Application No. 2013-063832, filed March 26, 2013, the content of which is incorporated herein by reference.

### [Background Art]

As a power generator mounted on a motorcycle, a magnetic power generator capable of obtaining a high output with a simple structure is widely used. The magnetic power generator includes a stator around which a coil is wound, and a rotor having a permanent magnet. In the magnetic type generator, by rotationally driving the rotor through the engine or the like, a rotation magnetic field by the permanent magnet crosses the coil, and an electromotive force is generated on the side of the stator.

In addition, in recent motorcycles, as apparatus become more advanced (ETC, car navigation systems or the like are installed) and devices for the reduction of environmental load are added (engine control microcomputers are installed), the electrical load in the vehicle continues to increase. For this reason, the power generator for a motorcycle requires a higher output and higher efficiency.

In the motorcycle power generator, in order to satisfy this request, daily improvements have been made in magnetic circuits and components.

For example, Patent Literature 1 discloses a power generator in which a magnetic circuit with a higher output and higher efficiency is adopted. In the magnetic power generator of Patent Literature 1, the following problems require improvement.

In the magnetic power generator of Patent Literature 1, since the number of salient poles is 2p-2 with respect to the number of magnetic poles 2p, the number of salient poles decreases. Therefore, in the magnetic power generator of Patent Literature 1, in some cases, the amount of power generation decreases.

In the magnetic power generator of Patent Literature 1, when the number of magnetic poles is increased to secure the amount of power generation (for example, 20 poles), there is a need for an FET type voltage regulator that can respond to high frequencies. Since the FET type regulator is more expensive than a device using a thyristor, a system cost increases, which causes an increase in product price.

In the magnetic power generator of Patent Literature 1, since the number of salient poles of each phase is different in some cases, there is a possibility of the power generation efficiency being lowered due to the imbalance of the number of salient poles. In particular, in a magnetic pole configuration (e.g., N = 12, 16) that can use an inexpensive voltage regulator, the power balance between the phases is easily lost due to imbalance of the salient pole count, and there is a possibility of the power generation efficiency being lowered.

Therefore, a power generator in which a plurality of salient poles are disposed has been suggested. Patent Literature 2 discloses a power generator in which a disposition angle of the adjacent salient poles having the same phase is made to match a pole arc angle of a permanent magnet, and the disposition angle of the adjacent salient poles of the different phases is set to be narrower than the pole arc angle of the permanent magnet.

The magnetic power generator of Patent Literature 2 can improve the amount of power generation while maintaining the same size. The magnetic power generator of Patent Literature 2 is able to reduce the number of magnetic poles to fewer than 16 while ensuring the amount of power generation. Therefore, it is possible to suppress an increase in system cost by using an inexpensive thyristor type voltage regulator. In the magnetic power generator of Patent Literature 2, the salient poles of each phase can be uniformly disposed. As a result, it is possible to prevent a decrease in power generation efficiency due to the collapse of the power balance between the phases. Patent literature 3 discloses a related magnetic power generator having a salient pole stator, having asymmetric polar extensions.

### [Citation List]

### [Patent Literature]

[Patent Literature 1]
   International Publication No. WO 2003/098781
[Patent Literature 2]
   Japanese Unexamined Patent Application, First Publication No. 2011-120429 [Patent literature 3] GB 05602 A

### [Summary of Invention]

### [Technical Problem]

Although the magnetic power generator of Patent Literature 2 can improve the amount of power generation, there is a possibility of lowering the manufacturing efficiency.

In the magnetic power generator of Patent Literature 2, an interval between the adjacent salient poles having different phases is set to be narrower than an interval between the adjacent salient poles having the same phase. Since the interval between the adjacent salient poles is not uniform, when the coil is wound around the salient pole, for example, there is a need for measures such as varying the winding speed for each salient pole. Therefore, in some case, the manufacturing efficiency is lowered.

An object of the present invention is to provide a magnetic power generator that can prevent a decrease in manufacturing efficiency while achieving a high output and high efficiency of the power generation.

### [Solution to Problem]

According to a first aspect of the present invention, a magnetic power generator includes a stator and a rotor, the stator has a plurality of salient poles, the salient poles comprising a magnetic path section around which a coil is wound, and a projection section projecting to both sides from a front end portion of the magnetic path section, the rotor is rotatably disposed on an outer circumference or an inner circumference of the stator, and a plurality of permanent magnets are attached to the rotor to face the salient poles in a circumferential direction. In the magnetic power generator, the salient poles having the same phase are adjacently disposed in the circumferential direction, and a coil having the same phase is wound in series around the adjacently disposed salient poles having the same phase. The front end portion comprising a front end part of the magnetic path section and the protrusion section is configured to have a disposition angle between the front end portions having the same phase being equal to or less than a pole arc angle of the permanent magnet, and being greater than the disposition angle of the adjacent front end portions having different phases. The magnetic path section of the salient pole adjacent to the salient poles having different poles is disposed on the same phase side of the center line of the front end portion of the salient pole adjacent to the salient pole having the different pole.

According to a second aspect of the present invention, in the first aspect of the present invention, the magnetic path section is set so that the disposition angle between the magnetic path sections having the same phase matches the pole arc angle of the permanent magnet.

According to a third aspect of the present invention, in the first aspect of the present invention, the disposition angle of the magnetic path section is uniform.

According to a fourth aspect of the present invention, in any aspect of the first to third aspects of the present invention, a circumferential length of the front end portion is uniformly set.

According to a fifth aspect of the present invention, in any aspect of the first to fourth aspects of the present invention, a plurality of salient poles adjacently disposed in the circumferential direction form the same phase, and are disposed at the same electric angle.

### [Advantageous Effects of Invention]

According to the above-mentioned magnet generator, since the disposition angle of the front end portion of the salient pole is set to the pole arc angle of the permanent magnets, it is possible to suppress a decrease in power generation efficiency due to collapse of the power balance between the phases. Therefore, it is possible to achieve a high output and high efficiency of the power generator.

In addition, since the magnetic path section adjacent to the salient pole having the different phase is disposed in proximity to the magnetic path section having the same phase, it is possible to efficiently perform winding of the coil with respect to the magnetic path section and to prevent a decrease in manufacturing efficiency.

### [Brief Description of Drawings]

Fig. 1 is a cross-sectional view illustrating a configuration of a power generator according to a first embodiment of the present invention.
Fig. 2 is a diagram illustrating the shape and arrangement of a salient pole in the power generator according to the first embodiment of the present invention.
Fig. 3 is a diagram illustrating a front end portion according to the first embodiment of the present invention.
Fig. 4 is a diagram illustrating the arrangement of the salient pole according to the first embodiment of the present invention.

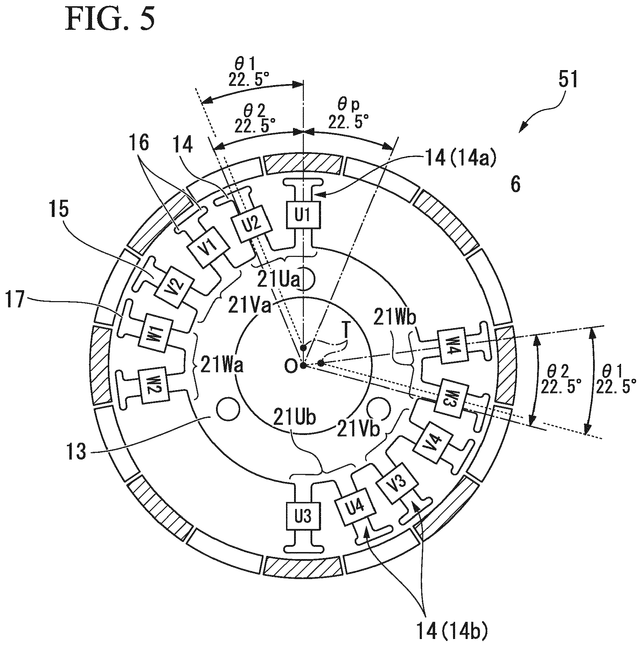

Fig. 5 is a diagram illustrating a power generator according to a second embodiment of the present invention.
Fig. 6 is a diagram illustrating a conventional power generator.
Fig. 7 is a diagram illustrating a configuration of a magnetic path section of a stator core according to a modified example of the embodiment of the present invention.

### [Description of Embodiments]

Hereinafter, embodiments of the present invention will be described with reference to the drawings.

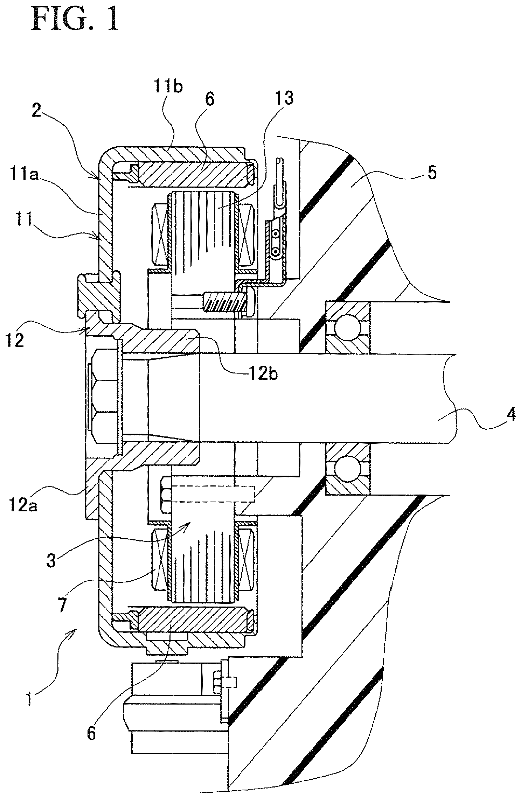

Fig. 1 is a cross-sectional view illustrating the configuration of a power generator according to a first embodiment of the present invention.

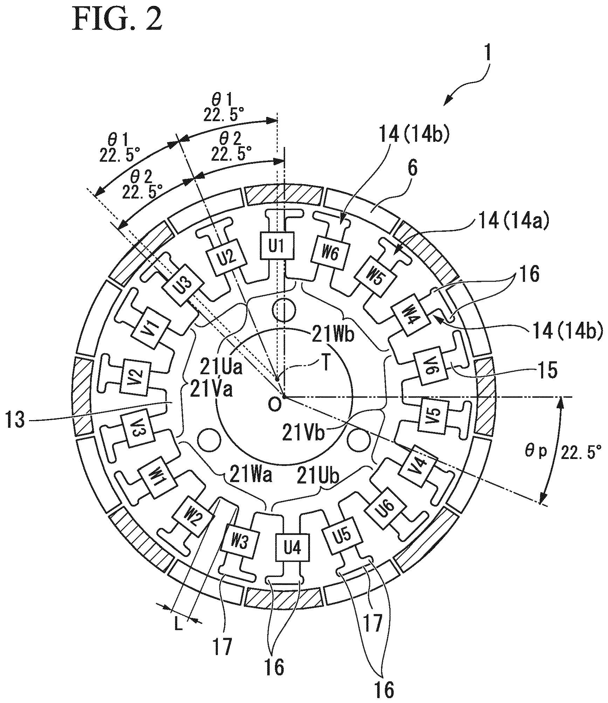

Fig. 2 is a diagram illustrating the shape and arrangement of a salient pole in the power generator according to the first embodiment of the present invention.

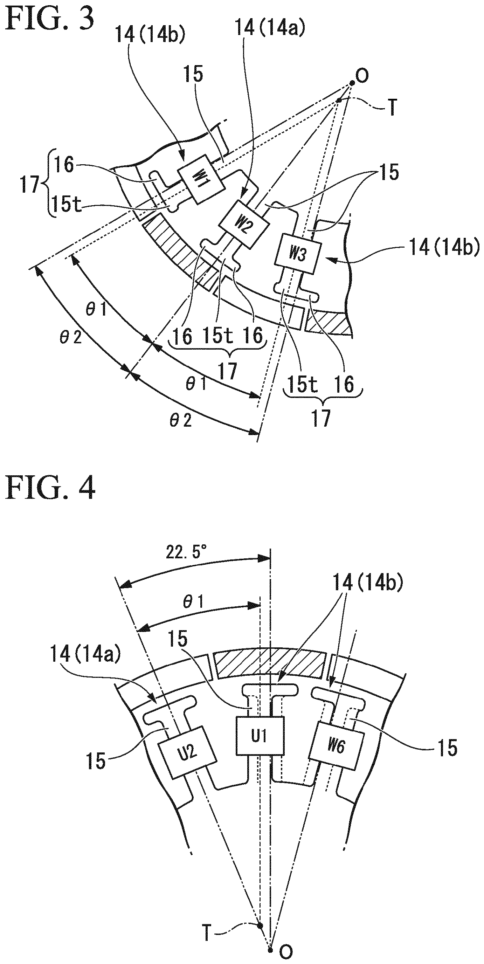

Fig. 3 is a diagram illustrating a front end portion according to the first embodiment of the present invention.

Fig. 4 is a diagram illustrating the arrangement of the salient pole according to the first embodiment of the present invention.

A power generator 1 is a so-called outer rotor type magnet generator. The generator 1 is used, for example, as an ACG (AC generator) of a motorcycle. The power generator 1 includes a rotor 2 and a stator 3.

In the following description, M represents the number of salient poles of the stator 3. N represents the number of magnetic poles of a permanent magnet 6 (rotor 2). θp represents a pole arc angle of the permanent magnet 6. θ1 represents a disposition angle of a magnetic path section 15 of the salient pole 14. θ2 represents a disposition angle of a front end portion 17 of the salient pole 14 in the same phase. X represents the number of phases (in the case of three phases, X = 3). θp, θ1 and θ2 are all mechanical angles.

O represents the center of rotation of the rotor 2. T represents the intersection (deposition center) of the center line between the magnetic path sections 15.

The rotor 2 is attached to a crankshaft 4 of the engine, and functions as a field element.

The stator 3 is attached to a housing 5 of the engine, and functions as an armature.

The permanent magnet 6 is attached to the rotor 2. A coil 7 is attached to the stator 3.

When the rotor 2 rotates on the outside of the coil 7, since a rotation magnetic field formed by the permanent magnet 6 crosses the coil 7, an electromotive force is generated in the coil 7 to generate power.

The rotor 2 is rotatably disposed on the outside of the stator 3. The rotor 2 includes a rotor yoke 11 and a boss rotor 12 formed of a magnetic material such as an iron.

The rotor yoke 11 is a bottomed cylindrical member that has a bottom section 11a and a cylindrical section 11b.

A plurality of permanent magnets 6 are disposed on the inner peripheral surface of the cylindrical section 11b in a circumferential direction.

Sixteen permanent magnets 6 are uniformly disposed at the pole arc angle θp of 22.5° so that the polarity of the inner surface side alternately becomes the N-pole and the S-pole. The number N (= 2p: p is an integer) of magnetic poles of the permanent magnet 6 is 16 (p = 8).

The boss rotor 12 is made up of a disk-shaped flange section 12a and a substantially cylindrical boss section 12b.

The flange section 12a is attached to the center of a bottom section 11a of the rotor yoke 11 to be concentric with the rotor yoke 11.

A boss section 12b protrudes from the center of the flange section 12a. The boss section 12b extends along the center line of the flange section 12a and is coupled to the end portion of a crank shaft 4 via a taper. When the crank shaft 4 rotates, the boss rotor 12 also rotates together with the crank shaft 4, and the rotor 2 rotates on the outside of the coil 7.

The stator 3 includes a stator core 13 formed by superimposing a plurality of steel plates. A plurality of salient poles 14 are formed in the stator core 13.

The salient pole 14 is made up of a pillar-shaped magnetic path section 15 around which a coil 7 is wound, and a protrusion section 16 that protrudes from the front end of the magnetic path section 15 in the circumferential direction. The part of the salient pole 14 facing the permanent magnet 6 is a front end portion 17. The front end portion 17 is made up of a front end part 15t of the magnetic path section 15 and the protrusion section 16.

The coil 7 is wound around the outer periphery of the magnetic path section 15 of the salient pole 14.

The power generator 1 generates a three-phase AC. Six of each of the U-, V- and W-phase salient poles 14 are provided. The number M of salient poles of the stator 3 is eighteen. The power generator 1 has a 16-pole 18-pole configuration.

Next, the arrangement of the salient poles 14 of the power generator 1 will be described in comparison with the arrangement of the salient poles of the conventional power generator.

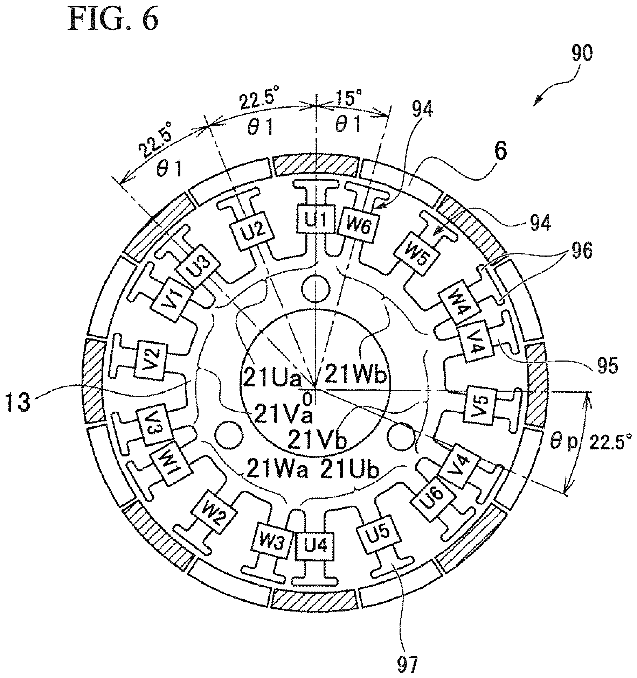

Fig. 6 illustrates a conventional power generator 90. The power generator 90 is a power generator having a configuration described in Patent Literature 2. In the power generator 90, the same members as those of the power generator 1 will be denoted by the same reference numerals.

In the following description, in some cases, six salient poles 14 forming the U-phase are referred to as U1 to U6. In some cases, six salient poles 14 forming a V-phase are referred to as V1 to V6. In some cases, six salient poles 14 forming a W-phase are referred to as W1 to W6.

As illustrated in Fig. 2, in the power generator 1, the salient poles 14 having the same phase (e.g., U-phase: U1, U2 and U3) are adjacently arranged in the circumferential direction. The coil having the same phase (e.g., U-phase) is wound in series around the adjacent salient poles having the same phase (e.g., U-phase: U1, U2 and U3).

In the power generator 1, among the eighteen salient poles 14, an angle θ1 between the magnetic path sections 15 of the salient poles 14 having the same phase is set to match the pole arc angle θp. For example, the angle θ1 between the magnetic path section 15 of the U2 salient pole 14 and the magnetic path section 15 of the U1 and U3 salient poles 14 is set to 22.5°. In the power generator 1, the angle θ1 between the magnetic path sections 15 of the salient poles 14 having the same phase is set to be greater than 20.0° that is an angle when uniformly disposing the adjacent salient poles 14 (magnetic path section 15). The angle θ1 is set to match the pole arc angle θp of the permanent magnet 6.

Moreover, among the three salient poles 14 having the same phase, the salient pole 14 (salient pole 14b) adjacent to the salient pole 14 having a different phase is disposed at a position (offset position) in which its magnetic path section 15a approaches the salient pole 14 having the same phase (magnetic path section 15). For example, since the U1 salient pole 14b is adjacent to the magnetic path section 15 of the W6 salient pole 14b, it is disposed at a position in which the magnetic path section 15a approaches the magnetic path section 15 of the U2 salient pole 14a.

Specifically, as illustrated in Fig. 4, the magnetic path section 15 of the U1 salient pole 14 (14b) is virtually set at a position in which it forms an angle of 22.5° with the magnetic path section 15 of the U2 salient pole 14 based on the center of rotation O of the rotor 2 (see dashed lines). Moreover, the magnetic path section 15 of the U1 salient pole 14 is located at a position (parallel movement position) shifted toward the magnetic path section 15 of the U2 salient pole 14 from the virtually set position, while maintaining the posture (angle θ1 = 22.5°) with respect to the magnetic path section 15 of the U2 salient pole 14 (see solid line).

For this reason, an intersection T between the center line L of the magnetic path section 15 of the U2 salient pole 14a and the center line L of the magnetic path section 15 of the U1 salient pole 14b does not match the center of rotation O of the rotor 2. The intersection T is located at a position that is spaced (moved) in a direction toward the magnetic path section 15 of the U2 salient pole 14a from the center of rotation O.

Similarly, the magnetic path section 15 of the W6 salient pole 14 (14b) is virtually set at a position in which it forms an angle of 22.5° with the magnetic path section 15 of the W5 salient pole 14, based on the center of rotation O of the rotor 2 (see dashed lines). Moreover, the magnetic path section 15 of the W6 salient pole 14 is located at a position (parallel movement position) shifted toward the magnetic path section 15 of the W5 salient pole 14 from the virtually set position, while maintaining the posture (angle θ1 = 22.5°) with respect to the magnetic path section 15 of the W5 salient pole 14 (see the solid line).

The magnetic path section 15 of the W6 salient pole 14 is disposed at a position that is shifted in an opposite direction to the magnetic path section 15 of the U1 salient pole 14 (parallel movement position).

The shift amount (parallel movement amount) of the magnetic path section 15 of the salient pole 14b is set so that the entire part between the adjacent magnetic path sections 15 becomes a substantially uniform space. The shift amount of the magnetic path section 15 is set in view of the circumferential thickness or radial length of the magnetic path section 15.

Thus, the magnetic path section 15 of the U1 salient pole 14a approaches the magnetic path section 15 of the U2 salient pole 14a, while maintaining the angle θ1 of 22.5° with respect to the magnetic path section 15 of the U2 salient pole 14b. In other words, the magnetic path section 15 of the U1 salient pole 14b is separated from the magnetic path section 15 of the W6 salient pole 14b.

Thus, the space between the adjacent magnetic path sections 15 becomes substantially uniform.

As illustrated in Fig. 2, in the power generator 1, the protrusion sections 16 of the salient pole 14 are disposed on both sides in the circumferential direction with respect to the magnetic path section 15. The salient pole 14 having the same protrusion amount of the pair of protrusion sections 16, and the salient pole 14 having the different protrusion amount of the pair of protrusion sections 16 are present.

In the power generator 1, the protrusion sections 16 are disposed on both sides in the circumferential direction of the salient poles 14a (e.g., U2, V2, W2 or the like) adjacent only to the salient pole 14 having the same phase. The protrusion amounts (the circumferential lengths) of the pair of protrusion sections 16 are the same.

For example, the U2 pole 14 is adjacent only to the U1 and U3 salient poles 14 having the same phase.

The protrusion sections 16 of the same projection amount are disposed on both sides in the circumferential direction of the U2 salient pole 14 (magnetic path section 15).

Moreover, in the power generator 1, the protrusion sections 16 are disposed on both sides in the circumferential direction of the salient pole 14b adjacent to the salient pole 14 having the different phase (e.g., U1, V1, W1 or the like). The protrusion amount of the pair of protrusion sections 16 (the circumferential lengths) is not uniform. The protrusion section 16 disposed at a lateral side adjacent to the salient pole 14 having the different phase is set to be long, and the protrusion section 16 disposed on the lateral side adjacent to the salient pole 14 having the same phase is set to be short.

For example, the U1 salient pole 14 is adjacent to the W6 salient pole 14 having the different phase. The protrusion sections 16 are disposed on both sides in the circumferential direction of the U1 salient pole 14 (magnetic path section 15). The protrusion section 16 having the long protrusion amount is disposed on the lateral side adjacent to the W6 salient pole 14 having the different phase. The protrusion section 16 having the short protrusion amount is disposed on the lateral side adjacent to the U2 salient pole 14 having the same phase.

Thus, the front end portion 17 is set to have the disposition angle θ2 of 22.5° in the salient poles 14 having the same phase. That is, the disposition angle θ2 between the front end portions 17 having the same phase is set to match the pole arc angle θp of the permanent magnet 6.

The angle θ2 between the front end portions 17 having the same phase is an angle between the circumferential center positions of each of the front end portions 17.

The salient poles 14 of the power generator 1 having the above-described shape and arrangement solves (alleviates) the disadvantages in a conventional generator 90, while maintaining (retaining) the advantages of the conventional generator 90.

As illustrated in Fig. 6, at a location of the power generator 90 in which the salient poles 94 having the same phase are adjacent to each other, the angle between the magnetic path sections 95 is set to 22.5°. The protrusion portions 96 of the salient pole 94 are disposed on both sides in the circumferential direction.

Therefore, in the power generator 90, three salient poles 94 (front end portion 97) forming the same phase face one another so as to be simultaneously positioned in the center line of the magnetic poles of the permanent magnet 6. For example, the front end portion 97 of the U1 salient pole 94 faces the N-pole of the permanent magnet 6, the front end portion 97 of the U2 salient pole 94 faces the S-pole of the permanent magnet 6, and the front end portion 97 of the U3 salient pole 94 faces the N-pole of the permanent magnet 6 simultaneously on the center line of each magnetic pole. Therefore, the power generator 90 can obtain a high power generating efficiency.

In addition, at a location in which the salient poles 94 having the different phase are adjacent to each other, the angle between the magnetic path sections 95 is set to 15.0°. The protrusion portions 96 of the salient pole 94 are disposed on both sides in the circumferential direction.

Therefore, at a location in which the salient poles 94 having the different phase are adjacent to each other, the space between the magnetic path sections 95 decreases. Therefore, as compared to a location in which the salient poles 94 having the same phase are adjacent to each other, the coil 7 is not easily wound around the magnetic path section 95.

In the power generator 90, since the magnetic path section 95 around which the coil 7 is easily wound is mixed with the magnetic path 95 around which the coil is not easily wound, the efficiency of the winding operation of the coil 7 is lowered.

In contrast, in the power generator 1 according to a first embodiment of the present invention, the angle θ1 between the magnetic path sections 15 of the salient poles 14 having the same phase is set to match the pole arc angle θp. Also, among the three salient poles 14 having the same phase, the salient pole 14 (salient pole 14b) adjacent to the salient pole 14 having the different phase is disposed at a location that is shifted so that the magnetic path sections 15 are closer to the salient pole 14a (magnetic path section 15) having the same phase.

Thus, like the power generator 90, in the power generator 1, a location of the large space between the magnetic path sections 15 in the stator 3 is not mixed with a location of the small space between the magnetic path sections 15. Specifically, the magnetic path section 15 of the salient pole U3 adjacent to the salient pole 14 having the different pole is disposed at a position closer to the salient pole U2 having the same phase than the center line of the front end portion 17 of the salient pole U3 adjacent to the salient pole 14 having the different pole. Thus, for example, an area of the slot formed between the U3 magnetic path section 15 and the U2 magnetic path section 15 can be made substantially equal to an area of the slot formed between the U3 magnetic path section 15 and the V1 magnetic path section 15.

Thus, the space between the magnetic path sections 15 in the power generator 1 is substantially uniform. Therefore, it is possible to efficiently wind the coil 7 with respect to each of the salient poles 14 of the stator 3 of the power generator 1 by a winding machine (not illustrated).

In addition, in the power generator 1, the disposition angle θ2 between the front end portions 17 of the salient poles 14 having the same phase is set to 22.5°.

For this reason, in the power generator 1, the front end portion 17 of the U1 salient pole 14 faces the N-pole of the permanent magnet 6, the front end portion 17 of the U2 salient pole 14 faces the S-pole of the permanent magnet 6, and the front end portion 17 of the U3 salient pole 14 faces the N-pole of the permanent magnet 6 simultaneously on the center line of each magnetic pole. Thus, similarly to the power generator 90, the power generator 1 can achieve high power generation efficiency.

In the power generator 1, the disposition angle θ2 between the front end portions 17 having the same phase is 22.5°, and the disposition angle between the adjacent front end portions 17 having the different phases is 15°. Thus, if the disposition angle θ2 between the front end portions 17 having the same phase is larger than the disposition angle between the adjacent front end portions 17 having the different phases, since the same electrical angle between the salient poles 14 having the same phase can be obtained, a high efficiency can be attained.

As illustrated in Fig. 2, in the power generator 1, three salient poles 14 are adjacently disposed in the circumferential direction to form a pole pair 21. For example, the U1 salient pole 14, the U2 salient pole 14, and the U3 salient pole 14 are adjacently disposed in the circumferential direction. The three salient poles 14 form a U-phase pole pair 21Ua.

Also, three salient poles 14 in the same phase are disposed at the same electric angle. In each of the pole pairs 21, three salient poles 14 face the permanent magnet 6 having the different polarity to have the same electrical angle.

The front end portions 17 of three salient poles 14 in the pole pair 21 are set at substantially the same angle θ2 as the pole arc angle θp of the permanent magnet 6 so that the adjacent salient poles face the magnetic poles having the different polarity.

In three salient poles 14 of the pole pair 21, the winding directions of the coil 7 wound around the adjacent salient poles 14 are set in mutually opposite directions. For example, the winding direction of the coil 7 wound around the U1 salient pole 14 is opposite to the winding direction of the coil 7 wound around the U2 salient pole 14.

Similarly, the V1, V2 and V3 salient poles 14 forming a V-phase are adjacently disposed to form a pole pair 21Va. The W1, W2 and W3 salient poles 14 forming the W-phase are adjacently disposed to form a pole pair 21Wa.

In the pole pairs 21Va, 21Wa, V1 to V3 and W1 to W3 face the permanent magnet 6 having the different polarity at the same electrical angle. The angle θ2 between the front end portions 17 of V1 to V3 and W1 to W3 salient poles 14 is set to 22.5°.

The coil 7 wound in the opposite direction is disposed between the adjacent salient poles 14 in the same phase (V1 and V2, V2 and V3, W1 and W2, W2 and W3).

A pair of the pole pairs 21 of each phase are provided. The two pole pairs 21 are disposed to face each other with the center of rotation O of the rotor 2 interposed therebetween. The pole pairs 21Ub are provided at positions of the pole pairs 21Ua facing each other with the center of rotation O interposed therebetween. Similarly, the pole pairs 21Vb and 21Wb are provided in the pole pairs 21Va and 21Wa.

The three salient poles 14 (U-phase: U4, U5 and U6, V-phase: V4, V5 and V6, and W-phase: W4, W5 and W6) are also located in the pole pairs 21Ub, 21Vb and 21Wb.

In the power generator 1, the six salient poles 14 of each phase are uniformly disposed. Thus, even in the magnetic pole configuration (the number of poles N = 16) that can use a thyristor-type voltage regulator, the power balance between the phases does not collapse, and the power generation efficiency is not lowered.

Thus, the power generator 1 according to this embodiment is set such that the angle θ2 between the front end portions 17 of the salient poles 14 having the same phase matches the pole arc angle θp of the permanent magnet 6. Therefore, it is possible to suppress a decrease in power generation efficiency due to collapse of the power balance between the phases. Therefore, it is possible to achieve a high output and high efficiency of the power generator.

In addition, the power generator 1 is set such that the angle θ1 between the front end portions 17 of the salient poles 14 having the same phase matches the pole arc angle θp of the permanent magnet 6, and the magnetic path section 15 of the salient pole 14b adjacent to the salient pole 14 having the different phase is disposed at a position (shifted position) close to the magnetic path section 15 of the salient pole 14a having the same phase. Accordingly, it is possible to secure a sufficient space between the magnetic path sections 15. Therefore, it is possible to effectively perform the winding of the coil 7 with respect to the magnetic path section 15, and it is possible to prevent a decrease in manufacturing efficiency. Also, since it is possible to increase the number of windings of the coil 7 wound around the magnetic path section 15, it is possible to achieve a high output and high efficiency of the power generator 1.

In the power generator 1 according to this embodiment, in order to equalize the lengths L of the base of the salient poles 14 (see Fig. 2), the salient poles 14 are offset while maintaining the angle of the magnetic path section 15. When changing the angle of the magnetic path section 14 to set the length L of the base at substantially equal intervals, in a case in which the width of the front end portion 17 is extremely narrow, the magnetic path section 15 may deviate from the front end portion 17. That is, when the angle of the magnetic path section 15 is changed, the amount of movement of the root of the magnetic path section 15 is different from the amount of movement of the front end portion of the magnetic path section 15. Thus, when the length L of the base of the salient pole 14 is equally set, in some cases, the front end portion of the salient pole 14 deviates from the front end portion 17. That is, in some cases, it is not possible to set the amount of movement of the base at equal intervals merely by changing the angle of the magnetic path section 15.

Therefore, in order to equalize the length L of the base of the salient pole 14, it is offset while maintaining the angle of the magnetic path section 15 of the salient pole 14. Even when it is not possible to set the distance L of the root at equal intervals by changing the angle of the magnetic path section 15, in some cases, it is possible to equalize the movement amount of the base of the salient pole 14 and the amount of movement of the front end of the salient pole 14 by offset.

In the power generator 1 according to this embodiment, the lengths L of the base of the salient pole 14 are almost uniform. Therefore, the space between the adjacent magnetic path sections 15 is substantially uniform. Since the space is substantially uniform, the amount of the coil 7 wound around each salient pole 14 is substantially uniform, the windings of the same specification can be provided at each salient pole 14 (e.g., the winding of the same wire diameter), and it is possible to increase the efficiency. If the amount of the coil 7 wound around each salient pole 14 is substantially uniform, since it is possible to increase the efficiency, there are also cases in which each length L of the base of each salient pole 14 is slightly shifted. For example, there is no problem as long as it is within the range of ±10 percent.

The present invention is not limited to the above-mentioned embodiments, and it is needless to say that various modifications are possible without departing from the gist thereof.

For example, the above-described embodiment has been described as a 16-pole 18-pole configuration generator. However, as a second embodiment of the present invention, a power generator 51 having a 16-pole 12-pole configuration is also possible.

Although the above-described embodiment has been described with regard to a case in which the power generator of the present invention is used as a power generator, the power generator can also be used as a motor.

As in the ACG starter of the motorcycle, it is also possible to apply a configuration used as both the power generator and the motor. Although the above-described embodiment has been described with regard to an example in which the power generator of the present invention is applied to a motorcycle power generator, it is also possible to apply the power generator to the power generator or the motor of other applications.

Although the above-described embodiment has been described with regard to an example in which the present invention is applied to an outer rotor type power generator, it is also possible to apply the present invention to a so-called inner rotor type power generator in which the rotor is disposed inside the stator.

Although the above-described embodiment has been described as the three-phase generator, the present invention can also be applied to a multi-phase generator such as a five-phase generator.

The angle θ1 between the magnetic path sections 15 of the salient pole 14 is not limited to the case of matching the pole arc angle θp of the permanent magnet 6. The angle θ1 may be set to be greater than the angle (20.0° in the case of 18 poles) in which the magnetic path sections 15 adjacent to each other are uniformly disposed.

The angle θ2 between the front end portions 17 having the same phase is not limited to the case of matching the pole arc angle θp of the permanent magnet 6. For example, the angle may be set to be smaller than the pole arc angle θp in consideration of the winding work of the coil 7 to the magnetic path section 15.

If the disposition angle θ2 between the front end portions 17 having the same phase is equal to or less than the pole arc angle θp of the permanent magnet 6, since the interval between the front end portions 17 having the different phase widens, leakage of magnetic flux decreases, and high efficiency is achieved. For this reason, for example, even when the pole arc angle of the permanent magnet 6 is 22.5° and the disposition angle θ2 between the front end portions 17 having the same phase is 21.5°, the same effect can be obtained.

This is not limited to a case in which the disposition angle θ2 between the front end portions 17 having the same phase is 22.5°, and the disposition angle between the adjacent front end portions 17 having the different phase is 15°. The disposition angle θ2 between the front end portions 17 having the same phase may be larger than the disposition angle between the adjacent front end portions 17 having the different phase. For example, even when the disposition angle θ2 between the front end portions 17 having the same phase is 21.5° and the disposition angle between the adjacent front end portions 17 having the different phase is 17°, the same effects can be obtained.

Further, although this embodiment has been described with regard to a case in which the disposition angle of the magnetic path sections having the same phase is different from the disposition angle of the adjacent magnetic path sections having the different phase, embodiments of the present invention are not limited to this configuration.

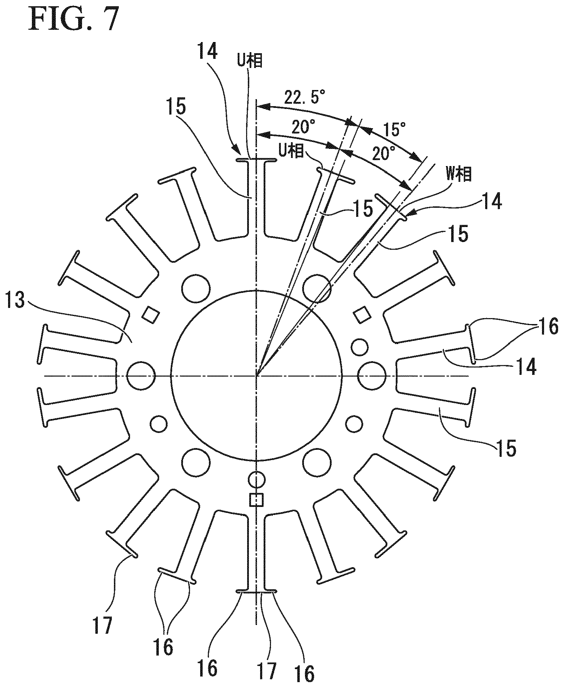

That is, as illustrated in Fig. 7, when the number of teeth is eighteen, the disposition angle of the magnetic path sections having the same phase may be set to 20°, and the disposition angle of the adjacent magnetic path sections having the different phase may be set to 20°.

By such a configuration, all the intervals of the magnetic path sections become uniform, and the space between the adjacent magnetic path sections 15 becomes uniform. Since the space is uniform, the amount of the coil 7 wound around each salient pole 14 becomes uniform, the windings of the same specification (e.g., the windings of the same wire diameter) can be provided on each salient pole 14, and it is possible to enhance the efficiency.

### [Industrial Applicability]

According to the above-mentioned magnet generator, since the disposition angle of the front end portions of the salient poles is set to the pole arc angle of the permanent magnet, it is possible to suppress a decrease in power generation efficiency due to collapse of the power balance between the phases. Therefore, it is possible to achieve a high output and high efficiency of the power generator.

In addition, since the magnetic path section adjacent to the salient poles having the different phase is located at a position close to the magnetic path section having the same phase, it is possible to efficiently perform winding of the coil with respect to the magnetic path section, and it is possible to prevent a decrease in the manufacturing efficiency.

### [Reference Signs List]

1, 51 Generator (Magnet generator)
2 Rotor
3 Stator
6 Permanent magnet
7 Coil
14 Salient pole
15 Magnetic path section
15t Front end part
16 Protrusion section
17 Front end portion
θp Pole arc angle
θ1 Disposition angle of magnetic path section
θ2 Disposition angle of front end portion
O Center of rotation of rotor
T Intersection of center line of magnetic path sections having same phase

## Claims

1. A magnetic power generator (1) comprising:
a stator (3) that has a plurality of salient poles (14), the salient poles (14) comprising a magnetic path section (15) around which a coil is wound, and a projection section (16) projecting to both sides from a front end portion (17) of the magnetic path section (15); and
a rotor (2) that is rotatably disposed on an outer circumference or an inner circumference of the stator, a plurality of permanent magnets (6) being attached to the rotor to face the salient poles (14) in a circumferential direction,
wherein the salient poles (14) having the same phase are adjacently disposed in the circumferential direction, and a coil having the same phase is wound in series around the adjacently disposed salient poles (14) having the same phase,
the adjacently disposed three salient poles (14) having the same phase, including the two salient poles (14) disposed on a different phase side and the one salient pole (14) disposed between the two salient poles (14) are arranged as one set,
the front end portion (17) comprising a front end part of the magnetic path (15) section and the protrusion section (16) is configured to have a disposition angle (θ2) between the front end portions having the same phase being equal to or less than a pole arc angle (θp) of the permanent magnet (6), and being greater than a disposition angle of the adjacent front end portions having different phases,
the magnetic path section (15) of the salient pole adjacent to the salient poles (14) having the different phases is disposed on the same phase side from the center line of the front end portion of the salient pole adjacent to the salient poles (14) having the different phases, and
all disposition angles of the magnetic path section (15) are uniform.

2. The magnetic power generator according to claim 1, wherein the magnetic path section (15) is set so that the disposition angle between the magnetic path sections having the same phase matches the pole arc angle (θp) of the permanent magnet (6).

3. The magnetic power generator according to claim 1, wherein the disposition angle of the magnetic path (6) section is uniform.

4. The magnetic power generator according to any one of claims 1 to 3, wherein a circumferential length of the front end portion (17) is uniformly set.

5. The magnetic power generator according to any one of claims 1 to 4, wherein a plurality of salient poles (14) adjacently disposed in the circumferential direction form the same phase and are disposed at the same electric angle.

## Patentansprüche

1. Ein magnetischer Stromgenerator (1), umfassend
einen Stator (3) mit mehreren ausgeprägten Polen (14), wobei die ausgeprägten Pole (14) aus einem magnetischen Pfadabschnitt (15) bestehen, um den eine Spule gewickelt ist, und einem vorspringenden Abschnitt (16), der an beiden Seiten eines vorderen Endabschnitts (17) des magnetischen Pfadabschnitts (15) vorragt; sowie einen Rotor (2), der drehbar angeordnet ist an einem Außenumfang oder einem Innenumfang des Stators, mehrere Permanentmagneten (6) sind an dem Rotor so befestigt, dass sie den ausgeprägten Polen (14) in Umfangsrichtung zugewandt sind
wobei die ausgeprägten Pole (14) mit der gleichen Phase benachbart in der Umfangsrichtung angeordnet sind und eine Spule mit der gleichen Phase in Reihe um die benachbart angeordneten ausgeprägten Pole (14) gewickelt ist, die die gleiche Phase aufweisen,
die benachbart angeordneten, drei ausgeprägten Pole (14) mit der gleichen Phase, einschließlich der beiden ausgeprägten Pole (14), die auf einer anderen Phasenseite angeordnet sind und der eine ausgeprägte Pol (14), der zwischen den beiden ausgeprägten Pole (14) angeordnet ist, sind als ein Satz angeordnet,
ein vorderer Endabschnitt (17), bestehend aus dem vorderen Endteil des magnetischen Pfadabschnitts (15) und dem Vorsprungsabschnitt (16) ist so konfiguriert, dass er einen Anordnungswinkel (θ2) zwischen den vorderen Endabschnitten die gleiche Phase haben, aufweist, der gleich oder kleiner als der Polbogenwinkel (θp) des Permanentmagneten (6) ist und größer als der Anordnungswinkel der benachbarten vorderen Endabschnitte mit unterschiedlichen Phasen.
der magnetische Pfadabschnitt (15) des ausgeprägten Pols (14), der den ausgeprägten Polen (14) mit den verschiedenen Phasen benachbart ist, ist auf derselben Phasenseite von der Mittellinie des vorderen Endabschnitte des ausgeprägten Pols, der den ausgeprägten Polen (14) mit den verschiedenen Phasen benachbart ist, angeordnet, und
alle Anordnungswinkel des magnetischen Pfadabschnitts (15) sind gleich.

2. Der magnetische Stromgenerator gemäß Anspruch 1, wobei der magnetische Pfadabschnitt (15) so vorgesehen ist, dass der Anordnungswinkel zwischen den magnetischen Pfadabschnitten mit denselben Phasen dem Polbogenwinkel (θp) des Permanentmagneten (6) entspricht.

3. Der magnetische Stromgenerator gemäß Anspruch 1, wobei der Anordnungswinkel des magnetischen Pfad-(6)-abschnitts gleichförmig ist.

4. Der magnetische Stromgenerator gemäß irgendeinem der Ansprüche 1 bis 3, wobei die Umfangslänge des vorderen Endabschnitts (17) gleichförmig vorgesehen ist.

5. Der magnetische Stromgenerator gemäß irgendeinem der Ansprüche 1 bis 4, wobei mehrere ausgeprägte Pole (14) benachbart angeordnet in der Umfangsrichtung dieselbe Phase bilden und im selben elektrischen Winkel angeordnet sind.

## Revendications

1. Générateur de puissance magnétique (1) comprenant :
un stator (3) qui comporte une pluralité de pôles saillants (14), les pôles saillants (14) comprenant une section de chemin magnétique (15) autour de laquelle est enroulée une bobine, et une section de projection (16) se projetant vers les deux côtés depuis une portion d'extrémité avant (17) de la section de chemin magnétique (15) ; et
un rotor (2) qui est disposé de manière rotative sur une circonférence extérieure ou une circonférence intérieure du stator, une pluralité d'aimants permanents (6) étant attachés au rotor pour faire face aux pôles saillants (14) dans une direction circonférentielle,
dans lequel les pôles saillants (14) ayant la même phase sont disposés de manière adjacente dans la direction circonférentielle, et une bobine ayant la même phase est enroulée en série autour des pôles saillants (14) disposés de manière adjacente ayant la même phase,
les trois pôles saillants (14) disposés de manière adjacente ayant la même phase, incluant les deux pôles saillants (14) disposés sur un côté de phase différente et le pôle saillant (14) disposé entre les deux pôles saillants (14) sont agencés sous un même ensemble,
la portion d'extrémité avant (17) comprenant une partie d'extrémité avant de la section de chemin magnétique (15) et de la section de projection (16) est configurée pour avoir un angle de disposition (θ2) entre les portions d'extrémité avant ayant la même phase égal ou inférieur à un angle d'arc de pôle (θp) de l'aimant permanent (6), et supérieur à un angle de disposition des portions d'extrémité avant adjacentes ayant des phases différentes,
la section de chemin magnétique (15) du pôle saillant adjacent aux pôles saillants (14) ayant les phases différentes est disposée sur le côté de même phase par rapport à la ligne centrale de la portion d'extrémité avant du pôle saillant adjacent aux pôles saillants (14) ayant les phases différentes, et
tous les angles de disposition de la section de chemin magnétique (15) sont uniformes.

2. Générateur de puissance magnétique selon la revendication 1, dans lequel la section de chemin magnétique (15) est réglée de telle sorte que l'angle de disposition entre les sections de chemin magnétique ayant la même phase correspond à l'angle d'arc de pôle (θp) de l'aimant permanent (6).

3. Générateur de puissance magnétique selon la revendication 1, dans lequel l'angle de disposition de la section de chemin magnétique (6) est uniforme.

4. Générateur de puissance magnétique selon l'une quelconque des revendications 1 à 3, dans lequel une longueur circonférentielle de la portion d'extrémité avant (17) est réglée de façon uniforme.

5. Générateur de puissance magnétique selon l'une quelconque des revendications 1 à 4, dans lequel une pluralité de pôles saillants (14) disposés de manière adjacente dans la direction circonférentielle forment la même phase et sont disposés selon le même angle électrique.
